# EUROPEAN PATENT SPECIFICATION

(11) **EP 0 728 972 B1**
(45) Date of publication and mention of the grant of the patent: **23.05.2001**
(21) Application number: 96830060.8
(22) Date of filing: 12.02.1996
(51) Int. Cl.: F16K 31/122

(54) **Pre-fill three-way valve having its drive located at the inside**
Vorfüll-Dreiwegventil mit innen gelegenem Antrieb
Soupape à trois voies de préinjection avec actionnement à l'intérieur

(30) Priority: 14.02.1995 IT MI950266
(43) Date of publication of application: 28.08.1996
(73) Proprietor: INNSE INNOCENTI ENGINEERING S.p.A., Milano (IT)
(72) Inventor: Zambetti, Guido, Romano di Lombardia, (Bergamo) (IT); Seminari, Renato, Codogno, (Milano) (IT)
(74) Representative: Adorno, Silvano

(56) References cited:
- DE-A- 2 444 607
- DE-A- 2 622 041
- DE-A- 2 623 080
- DE-A- 3 713 066
- FR-A- 2 505 013
- GB-A- 2 232 459
- US-A- 3 126 915
- US-A- 4 625 747

## Description

The present invention relates to a pre-fill three-way valve according to the features defined in the preamble of claim 1 which is particularly suitable to work under high pressures of the control fluid and with large flow rates of the same, especially in connection with quick movements at a low pressure and subsequent movements at high pressure and low speed.

It is known that this type of operation is provided by forging presses and especially by extruding presses for aluminum, brass, copper or steel during the steps of extension and subsequent retraction of the main piston respectively before and after an extrusion cycle.

It is also known that till now three-way valves designed for these purposes could be manufactured, with a diameter of 250 mm, for fluid pressures of up to 300 bar at maximum. The two opposite needs of having a quick decompression, e.g. after the extrusion step, with broad flow ports, following to very strong compressions resulted not to be mutually compatible. Furthermore the cylinder for controlling the shutter was particularly cumbersome, so much to interfere with other auxiliary means, thus being detrimental to the operations of the latter.

Therefore, for a diameter size greater than 250 mm, it was necessary to resort to the installation of two-way valves with an additional valve operating in the decompression step only.

Another drawback of the valves of this type according to the prior art was the difficulty of maintenance and also, not the last, the fact that in order to keep the shutter balanced in condition of compression it was necessary to exert strong forces of closure to avoid an incidental opening which would have brought to serious inconveniences.

It is therefore an object of the present invention to provide a three-way valve that is able to operate with fluids at very high pressures (up to 350 bars) and large flow ports (diameters of 250 mm and more) to have a quick decompression of the control fluid with a speedy return at a reduced pressure.

Another object of the present invention is that of providing a three-way valve of the above-mentioned type which is free of the drawbacks of the prior art under both the aspects of the overall encumbrance and of the maintenance difficulties.

Finally it is a further object of the present invention to provide a three-way valve of the above-mentioned type in which the shutter is substantially balanced without requiring strong forces for keeping the same in the closed position.

These objects are achieved by the valve as defined in claim 1. Preferred embodiments of the invention are defined in the dependent claims.

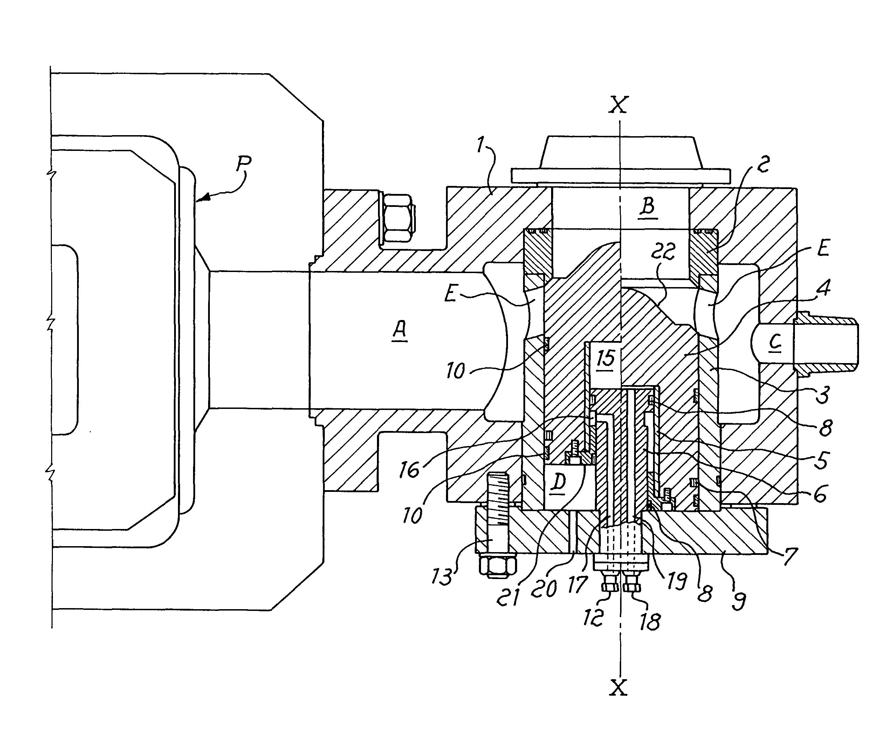

These and other objects, advantages and features of the valve according to the present invention will appear more clearly from the following detailed description of a preferred embodiment thereof, given by way of a non-limiting example with reference to the single figure showing a cross-section view of such an embodiment of valve.

With reference to the drawing, the valve of the present invention is essentially formed of a body 1 preferably made of forged steel and bored to form the three flow ports A, B, C, respectively connected with the utilization for the press control, with a reservoir of fluid substantially at the atmospheric pressure and with the fluid fed at high pressure, such as through a pump.

A distributor hub 3 is housed in the body 1 and at the inside thereof a shutter 4 is slidably mounted being provided with two guide rings 10 and a high-pressure automatic gasket 7 which ensures the hydraulic seal between port A and a chamber D, of varying volume, defined between the hub 3 and a control piston 6, as well as between the bottom surface 21 of the shutter and a flange 9 which is fastened to body 1 in a removable way on opposite side to said port B, e.g. by means of a number of studs 13 and relevant tightening nuts in order to close the assembly as a packet. Such a chamber D is in communication with the atmospheric pressure through a channel 20 formed in the flange 9, thus avoiding the pressurization of said chamber during the movements of shutter 4. This has been shown here with a curve shape 22 having a concave-convex profile of known type, but which could also have a different shape, and is provided centrally, starting from the surface 21, with a dead hollow 15, symmetric with respect to the central axis X-X, in which hollow there being housed a control cylinder 5 and the associate piston 6 for the movement of the shutter between a retracted position, in which the bottom surface 21 is in contact with the flange 9, as shown on the right side of the cross-section view with respect to axis X-X, and a position of full extension, as shown on the left side of the same sectional view, wherein the chamber D reaches the maximum of its volume and the shutter 4 is in contact with a seat ring 2 around the port B. It will be appreciated that in order to ensure a better sealing, the mutually contacting surfaces of shutter 4 and the ring-shaped seat 2 are of conical type. A plurality of ports E, formed circumferentially on the distributor hub 3 and closable by means of the shutter 4, bring into communication the port B with ports A and C respectively.

It will be noted that the piston 6 has been represented stationary, integral with the flange 9, while the cylinder 5 is movable, being integral with the shutter 4 and substantially coincident with the wall defining the hollow 15. The movement is obtained by feeding fluid in pressure in the hollow itself through a fitting 18 and a feed channel 19 for closing the shutter 4 and through a fitting 12 and the associate channel 17 for opening the shutter, thus adding pressure in an annular chamber 16. This latter is defined as an interspace between cylinder 5 and piston 6 and its volume is variable like for chambers D and 15, in an inversely proportional way with respect thereto.

The operation of the three-way valve according to the present invention is now described with reference to the drawing and the foregoing description.

First of all it should be noted that the fitting 18 is usually fed with pressurized fluid which, through the channel 19, causes the pressure of chamber 15 to raise thus leading the shutter 4 to the closure position against the seat ring 2, while the fluid in the chamber 16 is conveyed to the discharge 12 through channel 17. Therefore the valve is of the "normally closed" type, with the port B isolated from ports A and C, being obstructed the port E. Under these conditions, the compressed fluid from C, constantly in communication with port A, reaches the press utilization, schematically designated P. This situation is represented in the portion of the drawing in cross-section on the left side of X-X.

As already stated before, the force which is necessary to keep the shutter 4 at its closed position is extremely small and this is one of the most important advantages of the valve according to the invention. In fact the sectional area which is subject to the high pressure is only that of the interspace as defined by the difference between the inner diameter of the distributor hub 3 and the outer diameter of the shutter 4. Since this cross-section area is negligible, the force developed thereon by the pressure, although of high entity, of the fluid is extremely small, whereby an immediate opening of the valve would be prevented even if the pressure of the fluid entering the fitting 18 had to fail.

At the end of the operation step of the press, the valve receives the opening control, whereby the shutter 4 is gradually brought to match its bottom surface 21 with the flange 9. This happens by discharging through the channel 19 and the same fitting 18 the pressurized fluid being in the chamber 15, while the chamber 16 is pressurized by means of the fluid from fitting 12 through the channel 17. At the same time it is prevented that the chamber D is pressurized, as through the channel 20 it is constantly in communication with the atmospheric pressure. The same channel has also the function of draining the fluid being possibly present in case that the automatic gasket 7 were unable, for any reasons, to guarantee a perfect seal.

With the valve in an opening condition, as represented in the right side of the sectional view, ports A and C are communicating with port B through which both the high pressure from C and mainly the very high pressure of the fluid from the press actuator through A are discharged into the reservoir. Such a discharge occurs quickly as the valve allows a remarkably great flow rate of fluid reflowing into the reservoir.

The return to the initial step of the cycle of a press is carried up in a short time, while keeping the valve open, as the actuator cylinder is quickly filled with the fluid flowing from both B and C through the port A until a suitable signal controls the shutter 4 to close. In such a situation the port B is intercepted and the forward movement of the press is carried out only by means of the pressurized fluid from C.

From the above the advantages of the three-way valve are clear for high values of compression and of flow rate of the fluid, being particularly suitable to utilizations requiring quick movements at low pressure and subsequent low movements at a high pressure, especially but not exclusively for extruding presses.

## Claims

1. A pre-fill three-way valve, of the "normally closed" type, particularly suitable for high compressions and flow rates with quick decompressions, comprising a shutter (4) being movable within a body (1) of forged steel, wherein there are formed ports (A, B, C) for communicating the control fluid respectively to utilization (P), a reservoir at atmospheric pressure and a feeder of the compressed fluid, characterized in that it further comprises at the inside of said body (1) a distributor hub (3), a ring (2) as seat for the shutter (4) around said port (B) to the reservoir in the closed position and a control cylinder (5) with piston (6), the whole being closed as a packet with a flange (9) removably fastened to body (1) on the side opposite the said port (B) to the reservoir ; at the inside of the shutter (4) that is slidable within the hub (3), there being formed a hollow (15) for driving said piston (6).

2. A valve according to claim 1, characterized in that said hollow (15) is symmetric with respect to a central axis (X-X) of the valve.

3. A valve according to claim 2, characterized by the fact of further comprising ports (E) formed through said distributor hub (3) for communicating said central port (B) to the reservoir respectively with said other ports (A, C), as well as a chamber (D) having a variable volume, being defined between the hub (3) and said control piston (6) and also between said flange (9) and the bottom surface (21) of said shutter (4) which is facing to the flange itself, said chamber (D) being in communication with the outside through a channel (20) formed in the flange (9).

4. A valve according to claim 3, characterized in that said shutter (4) is provided, for its sliding within said distributor hub (3), with two guide rings (10) and an automatic high-pressure gasket (7) which ensures the hydraulic seal between the port (A) and said chamber (D), there being provided sealing gasket (8) for the relative movement between said piston (6) and an inner wall of said cylinder (5), suitable to isolate said hollow (15) from an annular chamber (16) of variable volume, which is defined between cylinder (5) and piston (6).

5. A valve according to claim 4, characterized in that said annular chamber (16) is communicating with the outside through a discharged channel (17) by means of which said annular chamber (16) can be alternatively pressurized, while a second channel (19) is provided, also at the inside of said piston (6) for feeding with compressed fluid said hollow (15) and, alternatively, put the latter in communication with the outside for its discharge.

6. A valve according to one or more of the preceding claims, characterized in that said seat ring (2) has a conical surface of contact with a corresponding conical surface of said shutter (4) in the position of closure.

7. A valve according to one or more of the preceding claims, characterized in that said flange (9) is fastened to said body (1) by means of studs and tightening nuts (13).

8. A valve according to one or more of the preceding claims, characterized in that said ports (A) and (C) are constantly communicating to each other.

## Patentansprüche

1. Ein Vorfüll-Dreiwegventil vom "normalerweise geschlossenen" Typ, besonders geeignet für hohe Drücke und Strömungsgeschwindigkeiten bei schnellen Druckentlastungen, umfassend einen Verschluß, (4), der beweglich innerhalb eines Gehäuses (1) aus geschmiedetem Stahl angeordnet ist, in dem Öffnungen (A, B, C) geformt sind für die Bewegung des Steuerfluids zur Nutzung (P), bzw. zu einem unter atmosphärischem Druck stehenden Tank bzw. zu einer Zufuhreinrichtung für das Druckfluid, **dadurch gekennzeichnet**, **daß** es im Innern des genannten Gehäuses (1) weiter umfaßt eine Verteilernabe (3), einen um die genannte Öffnung (B) zum Tank herum angeordneten Ring (2) als Sitz für den Verschluß (4) in der geschlossenen Position und einen Steuerzylinder (5) mit Kolben (6), das Ganze als Paket verschlossen mit einem Flansch (9), der abnehmbar am Gehäuse (1) auf der Seite befestigt ist, die gegenüber der genannten Öffnung (B) zum Tank angeordnet ist, wobei im Innern des Verschlusses (4), der verschieblich innerhalb der Nabe (3) angeordnet ist, ein Hohlraum 15 zum Antrieb des genannten Kolbens (6) geformt ist.

2. Ventil nach Anspruch 1, **dadurch gekennzeichnet, daß** der genannte Hohlraum (15) zu einer Mittelachse (X-X) des Ventils symmetrisch ist.

3. Ventil nach Anspruch 2, **dadurch gekennzeichnet, daß** es weiter umfaßt Öffnungen (E), die durch die genannte Verteilernabe (3) hindurch geformt sind, für die Verbindung der genannten mittleren Öffnung (B) zum Tank mit den genannten anderen Öffnungen (A bzw. C) sowie eine Kammer (D) mit variablem Volumen, die definiert wird zwischen der Nabe (3) und dem genannten Steuerkolben (6) und ebenso zwischen dem genannten Flansch (9) und der Unterfläche (21) des genannten Verschlusses (4) die zum Flansch selbst weist, wobei die genannte Kammer (D) mit der Außenseite verbunden ist durch einen Kanal (20), der im Flansch (9) geformt ist.

4. Ventil nach Anspruch 3, **dadurch gekennzeichnet, daß** der genannte Verschluß (4) für seine Verschiebung innerhalb der genannten Verteilernabe (3) mit zwei Führungsringen (10) und einer automatischen Hochdruckdichtung (7) versehen ist, welche die hydraulische Dichtung zwischen der Öffnung (A) und der genannten Kammer (D) sicherstellt, wobei eine Dichtung (8) für die relative Bewegung zwischen dem genannten Kolben (6) und einer inneren Wand des genannten Zylinders (5) vorgesehen ist, die geeignet ist, den genannten Hohlraum (15) gegenüber einer ringförmigen Kammer (16) mit variablem Volumen zu trennen, die zwischen dem Zylinder (5) und dem Kolben (6) definiert wird.

5. Ventil nach Anspruch 4, **dadurch gekennzeichnet, daß** die genannte Kammer (16) mit der Außenseite durch einen Entlastungskanal (17) verbunden ist, über den die genannte ringförmige Kammer (16) alternativ mit Druck beaufschlagt werden kann, während ebenfalls an der Innenseite des genannten Kolbens (6) ein zweiter Kanal (19) vorgesehen ist, durch den Druckfluid in den genannten Hohlraum (15) eingespeist wird und der alternativ den letzteren mit der Außenseite verbindet, um ihn zu entlasten.

6. Ventil nach einem oder mehreren der vorstehenden Ansprüche,
**dadurch gekennzeichnet, daß** der genannte Sitzring (2) eine konische Fläche für den Kontakt mit einer entsprechenden konischen Fläche des genannten Verschlusses (4) in der Verschlußposition hat.

7. Ventil nach einem oder mehreren der vorgenannten Ansprüche,
**dadurch gekennzeichnet, daß** der genannte Flansch (9) an dem genannten Gehäuse (1) durch Stiftschrauben und Klemmuttern (13) befestigt ist.

8. Ventil nach einem oder mehreren der genannten Ansprüche,
**dadurch gekennzeichnet, daß** die genannten Öffnungen (A) und (C) konstant miteinander in Verbindung stehen.

## Revendications

1. Soupape à trois voies de pré-injection du type "normalement fermée", appropriée particulièrement pour des compressions élevées et des débits d'écoulement avec des décompressions rapides, comprenant un obturateur (4) déplaçable dans un corps (1) en acier forgé, dans laquelle sont formés des orifices (A, B, C) pour faire communiquer le fluide de commande respectivement à l'utilisation (P), un résevoir à pression atmosphérique et un conduit d'amenée du fluide comprimé, caractérisée en ce qu'elle comprend en outre, à l'intérieur dudit corps (1), un moyeu distributeur (3), un anneau (2) comme siège pour la soupape (4) autour dudit orifice (B) vers le réservoir dans la position fermée et un vérin de commande (5) avec piston (6), l'ensemble étant fermé comme un paquet avec une bride (9) fixée amoviblement au corps (1) sur le côté opposé audit orifice (B) vers le résevoir; à l'intérieur de l'obturateur (4) qui est apte à coulisser dans le moyeu (3) étant ménagé un creux (15) pour entraîner ledit piston (6).

2. Soupape selon la revendication 1, caractérisée en ce que ledit creux (15) est symétrique par rapport à un axe central (X-X) de la soupape.

3. Soupape selon la revendication 2, caractérisée par le fait qu'elle comprend en outre des orifices (E) ménagés à travers ledit moyeu distributeur (3) pour mettre en communication ledit orifice central (B) vers le résevoir, respectivement avec lesdits autres orifices (A, C), ainsi qu'une chambre (D) d'un volume variable, définie entre le moyeu (3) et ledit piston de commande (6) et également entre ladite bride (9) et la surface inférieure (21) dudit obturateur (4) qui est orienté vers la bride elle-même, ladite chambre (D) étant en communication avec l'extérieur par un canal (20) ménagé dans la bride (9).

4. Soupape selon la revendication 3, caractérisée en ce que ledit obturateur (4) est pourvu, en vue de son coulissement dans ledit moyeu distributeur (3), de deux anneaux de guidage (10) et d'un joint d'étanchéité haute pression automatique (7) qui assure l'étanchéité hydraulique entre l'orifice (A) et ladite chambre (D), où est prévu un joint d'étanchéité (8) en vue d'un mouvement relatif entre ledit piston (6) et une paroi interne dudit vérin (5), qui convient pour isoler ledit creux (15) d'une chambre annulaire (16) de volume variable qui est définie entre le vérin (5) et le piston (6).

5. Soupape selon la revendication 4, caractérisée en ce que ladite chambre annulaire (16) communique avec l'extérieur à travers un canal d'évacuation (17) au moyen duquel ladite chambre annulaire (16) peut être alternativement mise en pression, pendant qu'un second canal (19) est prévu, également à l'intérieur dudit piston (6) pour alimenter en fluide comprimé ledit creux (15) et, alternativement, mettre ce dernier en communication avec l'extérieur pour son évacuation.

6. Soupape selon l'une ou plusieurs des revendications précédentes, caractérisée en ce que ledit anneau de siège (2) a une surface de contact conique avec une surface conique correspondante dudit obturateur (4) dans la position de fermeture.

7. Soupape selon l'une ou plusieurs des revendications précédentes, caractérisée en ce que ledit rebord (9) est fixé audit corps (1) au moyen de boulons et d'écrous de serrage (13).

8. Soupape selon l'une ou plusieurs des revendications précédentes, caractérisée en ce que lesdits orifices (A) et (C) communiquent constamment entre eux.
